# EUROPEAN PATENT SPECIFICATION

(11) **EP 3 283 416 B1**
(45) Date of publication and mention of the grant of the patent: **27.09.2023**
(21) Application number: 16780375.8
(22) Date of filing: 08.04.2016
(51) Int. Cl.: B65G 47/88, B65G 67/24, E04G 21/16, B65G 47/61, E01B 25/22, E04B 2/88, B66C 7/16

(54) **LIFT FOR LIFTING FACADE ELEMENTS AND ASSOCIATED LOCKING MEMBER**
AUFZUG ZUM ANHEBEN VON FASSADENELEMENTEN UND ZUGEHÖRIGES VERRIEGELUNGSELEMENT
DISPOSITIF DE LEVAGE POUR LE LEVAGE D'ÉLÉMENTS DE FAÇADE ET ÉLÉMENT DE VERROUILLAGE ASSOCIÉ

(30) Priority: 13.04.2015 SE 1550438
(43) Date of publication of application: 21.02.2018
(73) Proprietor: Brunkeberg Systems AB, 252 21 Helsingborg (SE)
(72) Inventor: FALK, Henrik, 114 48 Stockholm (SE); SIMLUND, David, 112 37 Stockholm (SE)
(74) Representative: Novitas Patent AB
(86) International application number: PCT/SE2016/050296
(87) International publication number: WO 2016/167704

(56) References cited:
- FR-A1- 2 304 735
- JP-A- 2008 266 891
- JP-A- 2014 198 960
- KR-A- 20130 053 486
- US-A- 5 036 772
- US-A- 5 485 791
- US-A1- 2009 084 747
- US-A1- 2013 264 171

## Description

### TECHNICAL FIELD

The present invention relates to conveyor systems for transporting facade elements. In particular the present invention pertains to a lift for vertically lifting facade elements and an associated locking member to hold the facade elements in place during the operation of the lift.

### BACKGROUND

Conveyor systems are commonly used in the movement of objects along a path such that the elements do not contact the ground or floor. Conveyor systems are especially useful in applications involving the transportation of heavy objects.

One type of conveyor system is an overhead conveyor system in which a fixed guide profile is assembled and in which a trolley member is positioned. Objects to be moved can be connected to the trolley member which can move within the profile.

Such overhead conveyor systems can typically be found in factories where parts to be, for example painted, are moved from a painting location to a drying location. In such a system the guide profile is constructed as a relatively permanent feature of the factory and remains constructed for long durations. Furthermore, as conveyor systems can be used to move objects of substantial weight the systems require robust and reliable assembly. Such systems are therefore costly and time consuming to assemble.

There is therefore a need for a conveyor system which is less time consuming and costly to assemble.

Scaffolding or staging is traditionally erected in most construction projects. Scaffolding is a temporary structure generally used to support a work crew and materials to aid in the construction, maintenance and repair of buildings. As scaffolding is temporary it is generally easy to assemble and disassemble. Scaffolding systems can for example be reused in multiple building projects.

Multi-storey buildings often comprise a facade acting as either a load-bearing structure or as a weather protective structure. The facade is generally constructed from individual facade elements which are installed in one of a variety of ways to the building. Facade elements are often transported to the building site on trucks. The elements are off-loaded, stored, and subsequently installed to the building. Due to the heavy weight of the facade elements, there is imminent risk of body damage when the facade elements are lifted off the truck.

As the building site undergoes numerous re-developments depending on which aspect of the building is being installed a conventional conveyor system is not appropriate for the transportation of facade elements. A conveyor system being easy to assemble and disassemble on a building site is required.

JP2014198960A discloses a lift for vertically lifting façade elements. The façade elements are vertically held by trolleys which run in rail members. The end surfaces of the rail members are closed by a rectangular plate shaped body which is welded to the rail.

### SUMMARY

Accordingly, the present invention preferably seeks to mitigate, alleviate or eliminate one or more of the above-identified deficiencies in the art and disadvantages singly or in any combination and solves at least the above mentioned problems.

According to a first aspect a lift, as defined in claim 1, for vertically lifting facade elements and comprising a locking member is provided.

According to another aspect, a method, as defined in claim 10, for off-loading a number of facade elements from an object, such as a vehicle, is provided.

### BRIEF DESCRIPTION OF THE DRAWINGS

These and other aspects, features and advantages of which the invention is capable of will be apparent and elucidated from the following description, reference being made to the accompanying drawings, in which
Fig. 1 is a perspective view of a part of a lift provided with a locking member;
Fig. 2 is a perspective view of a lift provided locking member;
Fig. 3 is a perspective view of a locking member;
Fig. 4a shows a bottom surface of a conveyor guide profile where the locking member is in its unlocked state;
Fig. 4b shows a bottom surface of a conveyor guide profile where the locking member is in its locked state;
Fig. 5 schematically shows a facade attachment trolley member;
Figs 6a to 6f show the lifting process of the lift;
Fig. 7 is a flowchart of a method;
Figs 8a and 8b show the moveably lift assembly when lifting facade elements when the locking member is in its locked state;
Figs 9a and 9b show the moveably lift assembly when aligned with further conveyor guide profiles and when the locking member is in its locked state; and
Figs 10a and 10b show the moveably lift assembly when the locking member is in its unlocked state.

### DETAILED DESCRIPTION

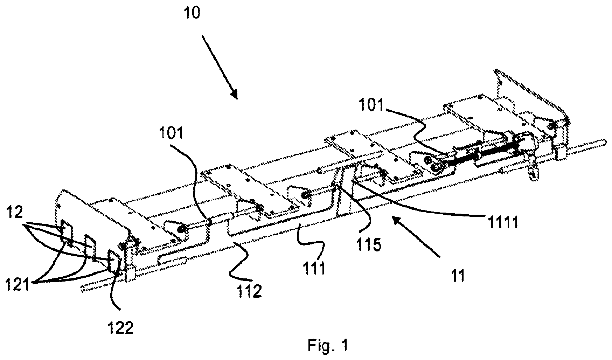

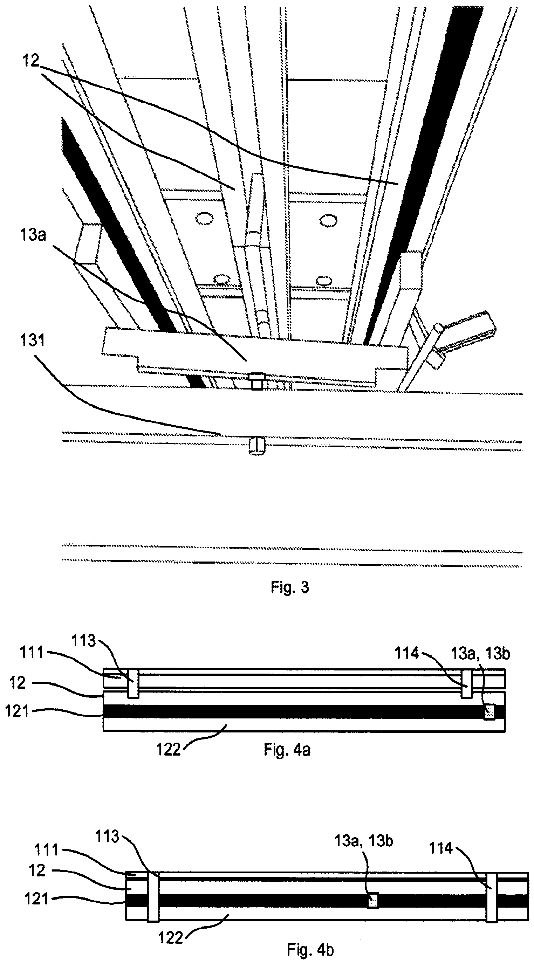

Figs 1 to 3 describe a locking member 11 for securing a number of facade elements connected to at least one open-ended rail conveyor guide profile 12 of a lift 10 for facade elements. Each open-ended conveyor guide profile 12 comprises a slot 121 arranged along the longitudinal extension of the conveyor guide profile 12 and through a bottom surface 122 of the conveyor guide profile. Each facade element is connected to at least one of the conveyor guide profiles 12 via at least one facade attachment trolley member 13a, 13b, see Fig. 3 and 4a to 4b. Each facade attachment trolley member 13a, 13b has a first part slidably arranged within a cavity formed by the corresponding conveyor guide profile 12 and extending outwards, e.g. vertically downwards in use, from said conveyor guide profile 12 via the slot 121 of the conveyor guide profile in use.

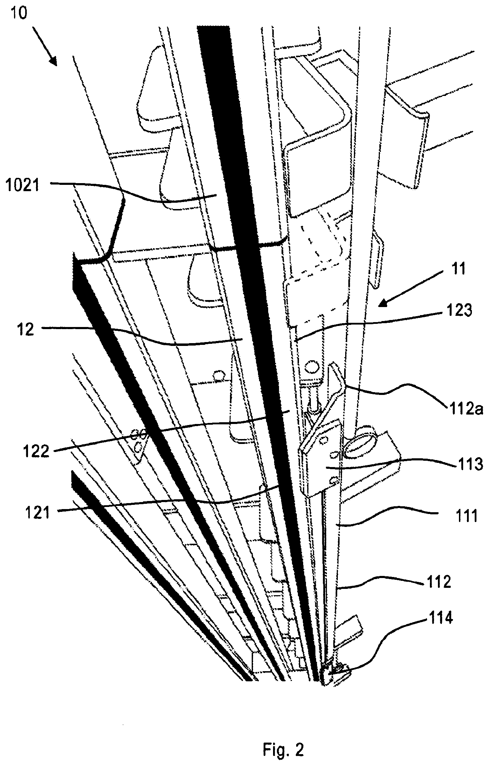

The locking member 11 member comprises a body 111 arranged adjacent to one side of at least one of the at least two conveyor guide profiles 12 and extending at least partly along a longitudinal axis L of said conveyor guide profile 12. The body 111 is pivotably arranged to the lift 10 to attain a first locked state in which an extension 112 of the body 111 is essentially parallel to an exterior surface of a sidewall 123 of the associated conveyor guide profile 12, see Fig. 1, and a second unlocked state wherein said extension 112 of the body 111 is pivoted out from the first locked state at an angle in relation to the sidewall 123 of the conveyor guide profile 12, as shown in Fig. 2.

The locking member body 111 comprises a first blocking member 113 arranged at a first longitudinal position of the body 111 and a second blocking member 114 arranged at a second longitudinal position of the body 111. The The first and second blocking members 113, 114 extend transversally from the body 111 from a bottom end 112a of the extension 112 towards the conveyor guide profile 12. angle may be 90The bottom end 112a of the extension 112 in the locked state extends beyond the bottom surface 122 of the corresponding conveyor guide profile 12, as shown Fig. 4b. In the locked state the first and second blocking members 113, 114 transversally extends beyond the slot 121 in the bottom surface 122 of the conveyor guide profile. In this way the facade attachment trolley members 13a, 13b, provided in the conveyor guide profile between the blocking members 113 and 114 are prevented from longitudinally moving past the first longitudinal position of the first blocking member 113 and the second longitudinal position of the second blocking member 114. By "extending transversally" is meant that the blocking members 113, 114 extend parallel with the bottom surface 122 of the conveyor guide profile 12, when the locking member is in the first locked state.

Fig. 4b schematically shows a bottom view of a conveyor guide profile 12, where the blocking members 113, 114 of the locking member 11 in its locked state extends transversally beyond the slot 121 such as to prevent any facade attachment trolley member 13a, 13b slidably arranged in the conveyor guide profile 12 and between the longitudinal positions of the blocking members to move past these positions. Fig. 4a schematically depicts another bottom view showing the unlocked state of the locking member 11 where the blocking members have been tilted or pivoted out from the conveyor guide profile 12, thereby allowing the facade attachment trolley member member 13a, 13b to slide past the longitudinal positions of the two blocking members 113, 114 along the longitudinal extension of the conveyor guide profile 12.

The locking member 11 ensures that the heavy facade elements cannot slide out from the conveyor guide profiles when the lift is operating thereby minimizing the risk of body crush damage during the operation of the lift.

In the unlocked state, as shown in Fig. 2, and Fig. 4a the body 111 is pivoted out at an angle in relation to the sidewall 123 of the conveyor guide profile 12 such that the first and second blocking members 113, 114 are moved free of the slot 121 of the bottom surface 122 of the conveyor guide profile 12. In this way the facade attachment trolley members are allowed to move longitudinally past the first and second longitudinal positions.

The body 111 is pivotably arranged to the lift 10 via at least one pivot connection 115, 101.

The body 111 may be slidably arranged to the pivot connection 115, 101 along the longitudinal axis of the conveyor guide profile 12 between two end points as seen in Fig. 1, where member 115 is slidable along the rod-shaped member 101. This functionality for improved attachment between the facade element usually arriving at a truck and the façade attachment trolley members 13a, 13b connected to the at least one guide profile 12 of the lift 10, as it allows for moving the façade attachment trolley members being locked between the first and second blocking members 113, 114 along the longitudinal axis of the guide profiles to be perfectly aligned with the facade elements to be offloaded from the truck below. Moreover, in real life the trucks are usually able to park below the lift within +-5cm from the ideal parking position. Hence, even if the truck parks at an angle in relation to the guide profiles of the lift, by means of the slidability function of the locking member 11 it is possible to quickly and securely attach the facade element from the truck without requiring the truck to be repositioned. This saves a lot of time when off-loading the truck.

It should be appreciated that a further locking member could also be provided on another conveyor guide profile 12 of the lift. When this further locking member is connected to the same facade element being simultaneously connected to the first conveyor guide profile 12, the angle of rotation (tiltability in the horizontal plane) of the facade element is even further increased, when the two locking members are slidably arranged along the longitudinal axis of their respective conveyor guide profiles.

An reciprocal piston 115, optionally being pneumatically controlled, is arranged to engage a surface 1111, see Fig. 1, of the body 111 to move the body 111 to the unlocked state, and when the pneumatically controlled piston is disengaged from said surface the body 111 moves back to the locked state.

Alternatively, a second pneumatically controlled piston may be provided on the opposite side of the surface 1111 to securely lock the locking member 11 in its first locked state when second piston engages the opposite side of the surface 1111.

Although pneumatic controlled pistons are presented here, it is equally possible to use other means of pivoting the locking member 11 between the first locked state and the second locked state. For example, an electric motor connected to the locking member could be used for this purpose.

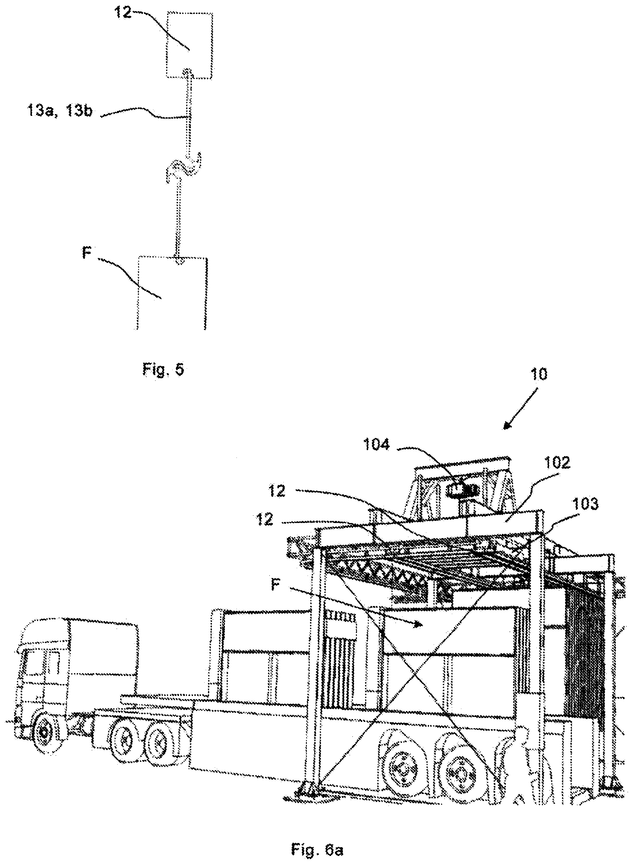

As shown in Fig. 5 each façade attachment trolley member 13a, 13b may comprise at its bottom end a hook shaped attachment unit 131 which is arranged to be connected to a corresponding hook shaped attachment unit arranged on each facade element. In this way the hook portions of the attachment units securely hooks into each other securely locks the two units together. The security of this hook connection is further facilitated by gravity acting on the heavy facade elements F. The hook shaped attachment unit 131 may be made from an aluminum profile having an extension in the transversal direction in relation to the conveyor guide profiles 12.

Above details of the locking member 11 of the lift 10 have been described. The lift per se will now be described further in detail.

Figs 6a to 6f show a lift 10 for vertically off-loading facade elements, denoted F in these drawings, from a truck parked below is schematically shown. The lift comprises a rigid frame structure 102. The rigid frame structure 102 may comprise U-shaped structure forming an open-ended cavity between its legs or sidewalls allowing a truck loaded with facade elements to drive into and through the cavity formed by the rigid frame structure 102. The truck is then put to rest at a position where the facade elements loaded on the truck are positioned directly below the lift, as shown in Fig. 6a. The lift 10 further comprises a moveable lift assembly 103 onto which the at least one conveyor guide profiles 12 and the locking member 11 (not shown in Figs 6a to 6f) as explained above are arranged. Moreover, a lift unit 104, e.g. pneumatically controlled, is arranged to move the lift assembly 103 between a top end level and a bottom end level.

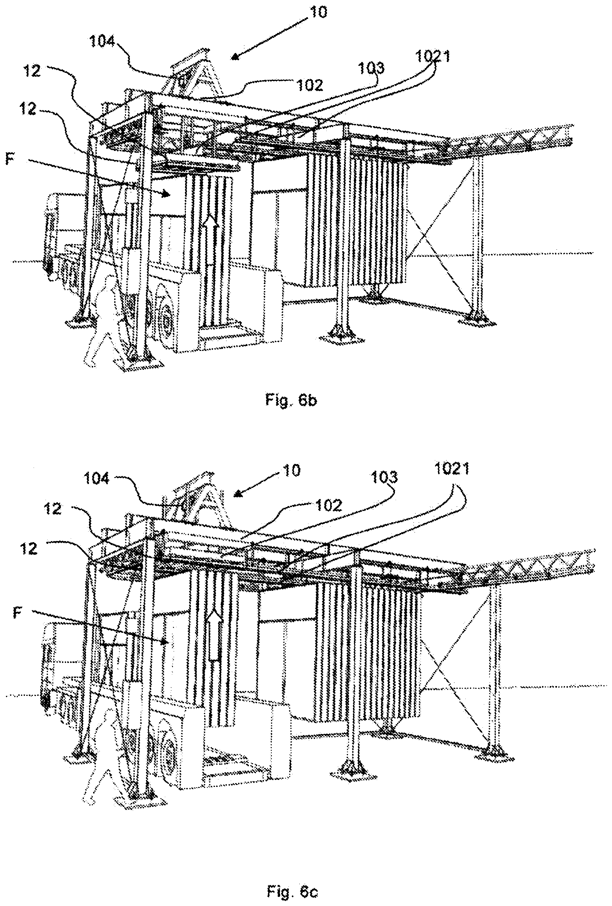

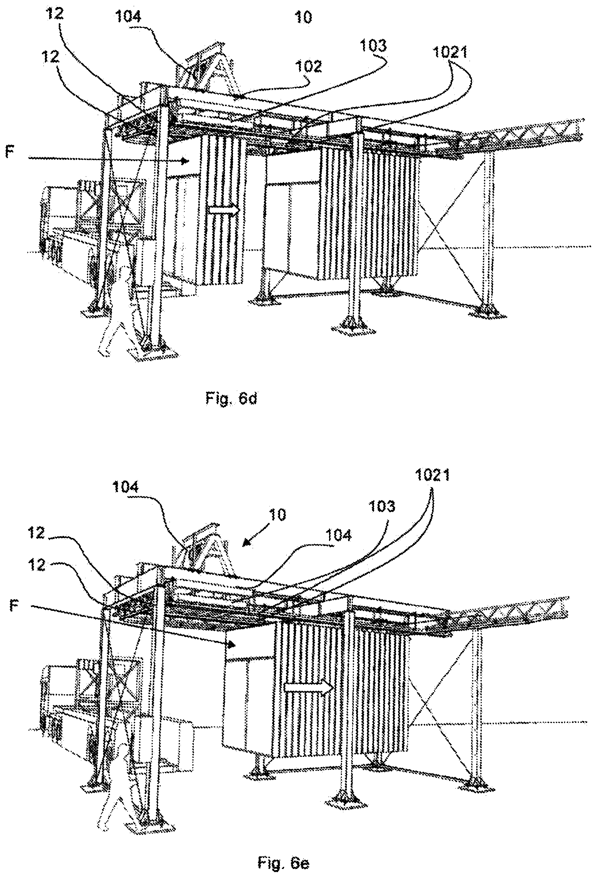

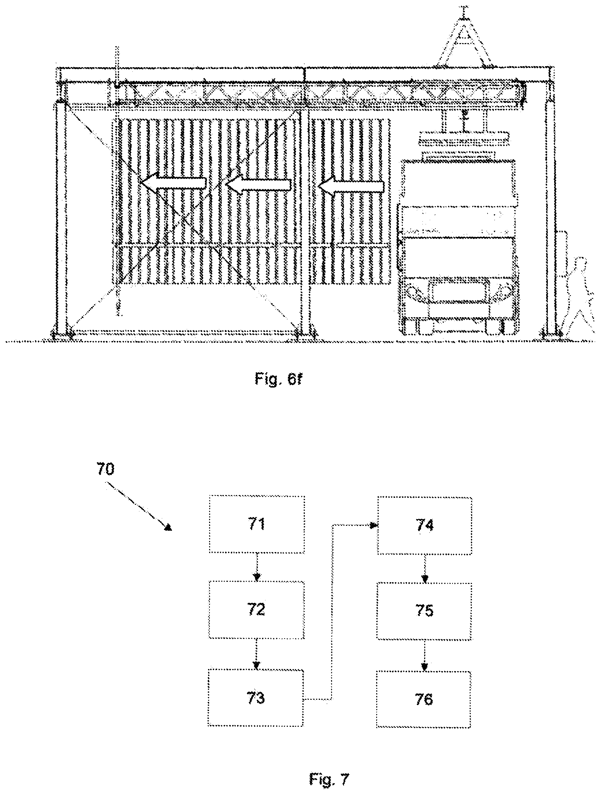

In Fig. 6b, the moveable lift assembly 103 is lowered towards the facade elements F loaded on the truck and the lifting process is initiated. In Fig. 6c, the facade elements F has been lifted to a level at which the conveyor guide profiles 12 are aligned further conveyor guide profiles 1021 of the rigid frame structure 102. Although not shown in Figs. 6a to 6c the locking member 11 will be in its locked state at these lifting stages. In Fig. 6d, the locking member is changed to its unlocked state, whereby the off-loaded facade elements F are allowed to be conveyed from the conveyor guide profiles 12 to the further conveyor guide profiles 1021 as indicated by the white arrow, until they have completely left the conveyor guide profiles 12 as shown in Fig. 6e. At this stage the off-loading process may be restarted by providing facade attachment trolley members (not shown) in the conveyor guide profiles 113, 114 and arranging the locking member 11 in its locked state, thereby safely securing the façade attachment trolley members in place between the first and second longitudinal positions of the conveyor guide profiles 12. Once a new set of facade elements F has been aligned below the lift 10, e.g. by re-positioning the truck, the off-loading process may be resumed, as shown in Fig. 6f.

The rigid frame structure 102 may further comprise a number of further conveyor guide profiles 1021, as shown in Fig. 2 and Figs 6b to 6e, corresponding to the number of conveyor guide profiles 12 of the moveably lift assembly 103. The further conveyor guide profiles 1021 are transversally aligned with conveyor guide profiles 12of the moveably lift assembly 103.

The number of further conveyor guide profiles 1021 may be aligned to an external conveyor guide profile system for allowing transport of the off-loaded facade elements to the facade of the building.

When the moveable lift assembly 103 is at the top level the conveyor guide profiles 12 thereof are located at a level above the further conveyor guide profiles 1021 of the rigid frame structure 102.

When the moveable lift assembly 103 is at the bottom level the conveyor guide profiles 12thereof are located at a level below the further conveyor guide profiles 1021 of the rigid frame structure 102, as shown in Fig. 6b.

The lift 10 may further comprise a horizontally reciprocal locking piston 105 rigidly provided above the further conveyor guide profiles 1021 for engaging a corresponding socket of the moveably lift assembly 103 when the moveably lift assembly is at its top level. When the moveably lift assembly is moved towards the bottom level again, the socket engages with the horizontally extended locking piston whereby the moveable lift assembly rests on the locking piston at a level between the top level and bottom level where its conveyor guide profiles 12 are aligned, as shown in Figs 2 and 6c to 6e, with the further conveyor guide profiles 1021 and thereby preventing the moveable lift assembly to proceed further towards the bottom level.

The rigid frame structure 102 may be made of stainless steel or any other suitable heavy duty material.

The conveyor guide profiles 12 may be made of stainless steel or any other suitable heavy duty material.

The locking member 11 may be made of stainless steel or any other suitable heavy duty material. For example the body 111 and the extension 112 are a steel plate.

In Fig. 7 a flow chart of a method 70 for off-loading a number of facade elements from an object, e.g. a vehicle parked under a lift 10 for lifting facade elements is provided. The method comprises providing 71 a open-ended conveyor guide profile 12 of a moveable lift assembly 103 with at least one facade attachment trolley member 13a, 13b, wherein each open-ended conveyor guide profile 12 comprises a slot 121 arranged along the longitudinal extension of the conveyor guide profile 12 and through a bottom surface 122 of the conveyor guide profile, wherein each facade attachment trolley member has a first part slidably arranged within a cavity formed by the corresponding conveyor guide profile 12 and extending outwards (vertically downwards in use) from said conveyor guide profile 12 via the slot 121 of the conveyor guide profile 12. The method further comprises activating 72 a first locked state of a locking member 11 of a moveable lift assembly 103, the locking member comprising a body 111 arranged adjacent to one side of at least one conveyor guide profile 12 of the moveably lift assembly 103 and extending at least partly along a longitudinal axis of said conveyor guide profile 12, wherein the body 111 is pivotably arranged to the lift 10 to attain the first locked state in which the body 111 has an extension being essentially parallel to an exterior surface of a sidewall 123 of the corresponding conveyor guide profile 12 and a second unlocked state wherein said extension 112 of the body pivoted out from the first locked state at an angle in relation to the sidewall 123 of the conveyor guide profile 12, the body 111 comprising a first blocking member 113 arranged at a first longitudinal position of the body 111 and a second blocking member 114 arranged at a second longitudinal position of the body 111, wherein the first and second blocking members 113, 114 extend transversally from the body 111 from a bottom end 112a of the extension 112 towards the conveyor guide profile 12, wherein the bottom end 112a of the extension 112 in the locked state extends beyond the bottom surface 122 of the corresponding conveyor guide profile 12, and wherein the first and second blocking members 113, 114 in the locked state transversally extends beyond the slot 121 in the bottom surface 122 of the conveyor guide profile, thereby preventing the at least one facade attachment trolley member 13a, 13b of longitudinally moving past the first longitudinal position of the first blocking member 113 and the second longitudinal position of the second blocking member 114. Moreover, the method 70 comprises lowering 73 the moveable lift assembly 103 of the lift 10 towards the facade elements to be off-loaded from the vehicle. Furthermore, the method 70 comprises connecting 74 the at least one facade attachment trolley member 13a, 13b to at least one facade element to be off-loaded from the vehicle. Moreover, the method 70 further comprises lifting 75 the at least one connected facade element to a level at which the at least one guide profile 12 is aligned with a further guide profile 1021 provided onto a rigid frame structure 102 of the lift 10. Moreover, the method comprises activating 76 the second unlocked state of the locking member 11 thereby allowing the off-loaded facade elements to move past the first and second longitudinal positions.

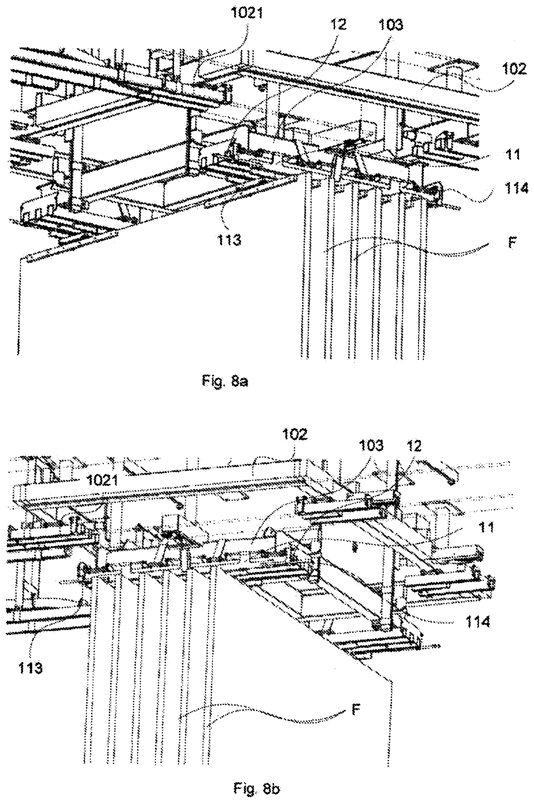

Figs 8a and 8b show two views of the moveably lift assembly 103 of the lift 10 when lifted upwards from its bottom level and carrying a number of facade elements F. In this lifting position the locking member 11 is in its locked state.

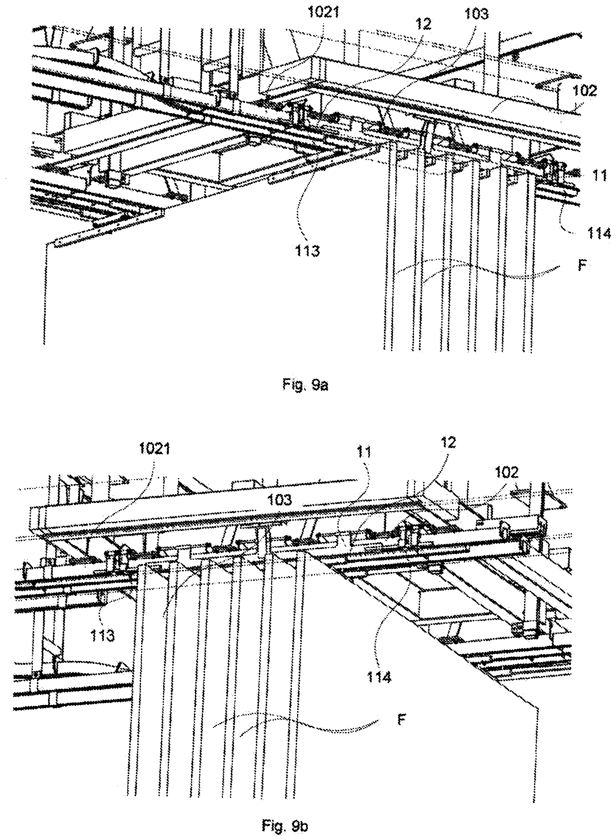

Figs 9a and 9b show two views of the moveably lift assembly 103 of the lift 10. Here, the conveyor guide profile(s) 12 of the moveable lift assembly 103 are aligned with the corresponding further conveyor guide profiles 1021 of the rigid frame structure 102. In this position the locking member 11 is still in its locked state.

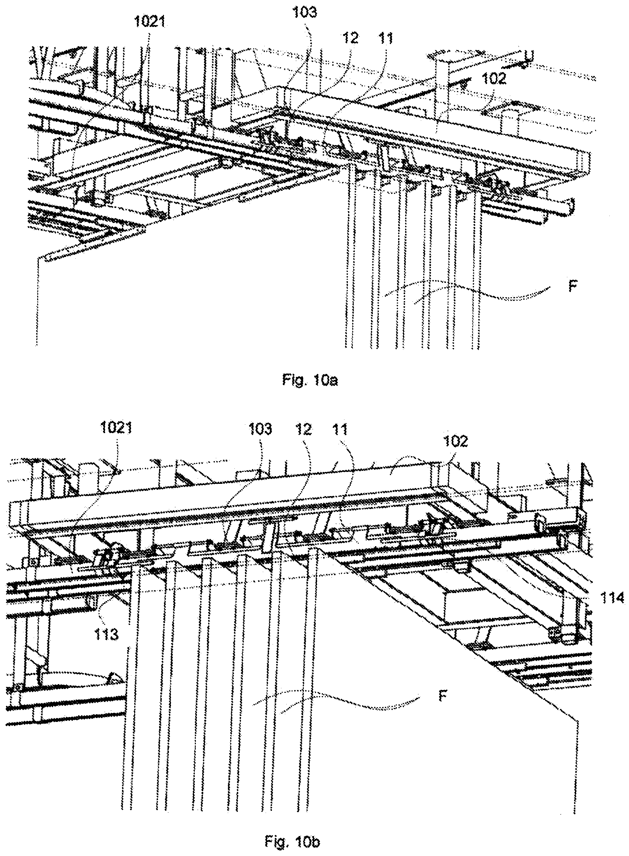

Figs 10a and 10b show two views of the moveably lift assembly 103 of the lift 10. Here, the conveyor guide profile(s) 12 of the moveable lift assembly 103 are aligned with the corresponding further conveyor guide profiles 1021 of the rigid frame structure 102. In this position the locking member 11 is still in its unlocked locked pivoted state, whereby the facade elements F may be conveyed past the longitudinal positions of the blocking members 113, 114 of the locking member 11.

It is appreciated that in figures 8-10 the locking member 11 is shown with the blocking members 113, 114 arranged at the ends of the extension 112 in order to be fully visible. However, the blocking members 113, 114 may of course be arranged in a central portion of the extension as shown in figure 2.

## Claims

1. A lift (10) for vertically lifting facade elements, comprising a locking member (11) for securing a number of facade elements connected via facade attachment trolley members (13a, 13b) to at least one open-ended rail conveyor guide profile (12) of the lift (10), wherein a slot (121) is arranged along the longitudinal extension of each conveyor guide profile (12) on a bottom surface (122) thereof, wherein the conveyor guide profile (12) is arranged to accommodate at least one facade attachment trolley member (13a, 13b), wherein each facade attachment trolley member (13a, 13b) has a part adapted to be slidably arranged within a cavity formed by the conveyor guide profile (12) and extending outwards from the associated conveyor guide profile (12) via the slot (121),
the locking member (11) comprising
an elongate body (111) arranged adjacent to an exterior surface of a sidewall (123) of at least one of the at least one conveyor guide profiles (12) and extending at least partly along a longitudinal extension thereof, wherein
the elongate body (111) has an upper end and a bottom end (112a), wherein the elongate body (111) is pivotably arranged to the lift (10) in its upper end via at least one pivot connection (115, 101) to attain a first locked state in which the elongate body (111) is essentially parallel to the sidewall (123) of the associated conveyor guide profile (12) and a second unlocked state wherein the elongate body (111) is pivoted out from the first locked state at an angle in relation to the sidewall (123),
a first blocking member (113) arranged at a first longitudinal position of the body (111), and
a second blocking member (114) arranged at a second longitudinal position of the body (111), wherein the first and second blocking members (113, 114) extend transversally from the bottom end (112a) of the elongate body (111) in a direction away elongate body (111) towards the conveyor guide profile (12), wherein the first and second blocking members (113, 114) in the locked state transversally extend over and beyond the slot (121) in the bottom surface (122) of the conveyor guide profile, thereby preventing any facade attachment trolley members (13a, 13b) attached to the conveyor guide profile of longitudinally moving past the first longitudinal position and the second longitudinal position.

2. The lift (10) according to claim 1, wherein in the unlocked state of the body (111) is pivoted out at an angle in relation to the sidewall (123) of the conveyor guide profile (12) such that the first and second blocking members (113, 114) are moved free of the slot (121) of the bottom surface (122) of the conveyor guide profile (12), thereby allowing any facade attachment trolley members (13a, 13b) trapped between the first and second longitudinal positions to move longitudinally past the same.

3. The lift (10) according to claim 1 or 2, wherein the body (111) is slidably arranged to the pivot connection along the longitudinal axis of the conveyor guide profile (12) between two end points.

4. The lift (10) according to any of the previous claims, wherein a reciprocal piston (115) is arranged to engage a surface (1111) of the body (111) to move the body (111) to the unlocked state, and when the reciprocal piston is disengaged from said surface (1111) the body (111) moves back to the locked state.

5. The lift (10) according to claim 1, further comprising
a rigid frame structure (102),
a moveable lift assembly (103) onto which the at least two conveyor guide profiles (12) and the locking member (11) are arranged, and a lift unit (104) arranged to move the lift assembly (103) between a top level and a bottom level.

6. The lift (10) according to claim 5 , wherein the rigid frame structure (102) further comprises a number of further conveyor guide profiles (1021) corresponding to that of the moveably lift assembly (103) , wherein the further conveyor guide profiles (1021) are transversally aligned with conveyor guide profiles (12) of the moveably lift assembly .

7. The lift (10) according to claims 5 or 6 , wherein when the moveable lift assembly (103) is at the top level, in use the conveyor guide profiles (12) thereof are located at a level above the further conveyor guide profiles (1021) of the rigid frame structure (102).

8. The lift (10) according to claims 5 to 7 , wherein when the moveable lift assembly (103) is at the bottom level, in use the conveyor guide profiles (12) thereof are located at a level below the further conveyor guide profiles (1021) of the rigid frame structure (102).

9. The lift (10) according to claim 5 , wherein the lift unit (104) is pneumatically controlled.

10. A method (70) for off-loading a number of facade elements from an object, such as a vehicle positioned below a lift (10) according to any of claims 5-9 for lifting facade elements, the method comprising:
providing (71) an open-ended conveyor guide profile (12) of the moveable lift assembly (103) with at least one facade attachment trolley member (13a, 13b), wherein each facade attachment trolley member (13a, 13b) has a first part slidably arranged within a cavity formed by the corresponding conveyor guide profile (12) and extending outwards from said conveyor guide profile (12) via the slot (121),
activating (72) a first locked state of the locking member (11) of the moveable lift assembly (103),
lowering (73) the moveable lift assembly (103) of the lift (10) towards the facade elements to be off-loaded from the object,
connecting (74) the at least one facade attachment trolley member (13a, 13b) to at least one facade element to be off-loaded from the object,
lifting (75) the at least one connected facade element to a level at which the at least one guide profile (12) is aligned with a further guide profile (1021) provided onto a rigid frame structure (102) of the lift (10); and
activating (76) the second unlocked state of the locking member (11) thereby allowing each facade attachment trolley member (13a, 13b), at least one of which being connected to a facade element, to move past the first and second longitudinal positions.

## Patentansprüche

1. Lift (10) zum vertikalen Heben von Fassadenelementen, der ein Verriegelungselement (11) zum Sichern einer Anzahl von Fassadenelementen umfasst, die über Fassadenanbringungswagenelemente (13a, 13b) mit wenigstens einem offenen Schienenfördererführungsprofil (12) des Lifts (10) verbunden sind,
wobei ein Schlitz (121) entlang der Längserstreckung jedes Fördererführungsprofils (12) auf einer Bodenfläche (122) davon angeordnet ist, wobei das Fördererführungsprofil (12) so ausgelegt ist, dass es wenigstens ein Fassadenanbringungswagenelement (13a, 13b) aufnimmt, wobei jedes Fassadenanbringungswagenelement (13a, 13b) ein Teil aufweist, das so ausgestaltet ist, dass es innerhalb eines durch das Fördererführungsprofil (12) gebildeten Hohlraums verschiebbar angeordnet ist, und sich von dem zugehörigen Fördererführungsprofil (12) über den Schlitz (121) nach außen erstreckt,
wobei das Verriegelungselement (11) umfasst:
einen Längskörper (111), der an einer Außenfläche einer Seitenwand (123) wenigstens eines des wenigstens einen Fördererführungsprofils (12) angrenzend angeordnet ist und sich wenigstens teilweise entlang einer Längserstreckung davon erstreckt, wobei der Längskörper (111) ein oberes Ende und ein unteres Ende (112a) aufweist, wobei der Längskörper (111) an seinem oberen Ende über wenigstens eine Schwenkverbindung (115, 101) schwenkbar an dem Lift (10) angebracht ist, um einen ersten verriegelten Zustand zu erreichen, in dem der Längskörper (111) im Wesentlichen parallel zu der Seitenwand (123) des zugehörigen Fördererführungsprofils (12) verläuft, und um einen zweiten nicht verriegelten Zustand zu erreichen, wobei der Längskörper (111) in einem Winkel relativ zu der Seitenwand (123) aus dem ersten verriegelten Zustand ausgeschwenkt wird,
ein erstes Blockierelement (113), das in einer ersten Längsposition des Körpers (111) angeordnet ist, und
ein zweites Blockierelement (114), das in einer zweiten Längsposition des Körpers (111) angeordnet ist, wobei sich das erste und das zweite Blockierelement (113, 114) quer von dem unteren Ende (112a) des Längskörpers (111) in eine Richtung weg von dem Längskörper (111) hin zu dem Fördererführungsprofil (12) erstrecken, wobei sich das erste und das zweite Blockierelement (113, 114) in dem verriegelten Zustand quer über den Schlitz (121) in der Bodenfläche (122) des Fördererführungsprofils und über diesen hinaus erstrecken, wodurch verhindert wird, dass sich an dem Fördererführungsprofil befestigte Fassadenanbringungswagenelemente (13a, 13b) längswärts über die erste Längsposition und die zweite Längsposition hinaus bewegen.

2. Lift (10) nach Anspruch 1, wobei in dem nicht verriegelten Zustand des Körpers (111) in einem Winkel relativ zu der Seitenwand (123) des Fördererführungsprofils (12) ausgeschwenkt wird, so dass das erste und das zweite Blockierelement (113, 114) aus dem Schlitz (112) der Bodenfläche (122) des Fördererführungsprofils (12) bewegt werden, wodurch möglich wird, dass sich zwischen der ersten und der zweiten Längsposition eingefangene Fassadenanbringungswagenelemente (13a, 13b) längswärts über diese hinaus bewegen.

3. Lift (10) nach Anspruch 1 oder 2, wobei der Körper (111) an der Schwenkverbindung verschiebbar entlang der Längsachse des Fördererführungsprofils (12) zwischen zwei Endpunkten angeordnet ist.

4. Lift (10) nach einem der vorstehenden Ansprüche, wobei ein sich hin- und herbewegender Kolben (115) so ausgelegt ist, dass er mit einer Oberfläche (1111) des Körpers (111) in Eingriff gelangt, um den Körper (111) in den nicht verriegelten Zustand zu bewegen, und wenn der sich hin- und herbewegende Kolben von der Oberfläche (1111) gelöst ist, sich der Körper (111) zurück in den verriegelten Zustand bewegt.

5. Lift (10) nach Anspruch 1, der ferner umfasst:
eine starre Rahmenstruktur (102),
eine bewegliche Hebebaugruppe (103), auf dem die wenigstens zwei Fördererführungsprofile (12) und das Verriegelungselement (11) angeordnet sind, und eine Hebeeinheit (104), die so ausgelegt ist, dass sie die Hebebaugruppe (103) zwischen einer oberen Ebene und einer unteren Ebene bewegt.

6. Lift (10) nach Anspruch 5, wobei die starre Rahmenstruktur (102) ferner eine Anzahl von weiteren Fördererführungsprofilen (1021) umfasst, die jenen der beweglichen Hebebaugruppe (103) entsprechen, wobei die weiteren Fördererführungsprofile (1021) quer mit den Fördererführungsprofilen (12) der beweglichen Hebebaugruppe ausgerichtet sind.

7. Lift (10) nach Anspruch 5 oder 6, wobei, wenn sich die bewegliche Hebebaugruppe (103) auf der oberen Ebene befindet, sich die Fördererführungsprofile (12) davon in Gebrauch auf einer Ebene über den weiteren Fördererführungsprofilen (1021) der starren Rahmenstruktur (102) befinden.

8. Lift (10) nach den Ansprüchen 5 bis 7, wobei, wenn sich die bewegliche Hebebaugruppe (103) auf der unteren Ebene befindet, sich die Fördererführungsprofile (12) davon in Gebrauch auf einer Ebene unter den weiteren Fördererführungsprofilen (1021) der starren Rahmenstruktur (102) befinden.

9. Lift (10) nach Anspruch 5, wobei die Lifteinheit (104) pneumatisch gesteuert wird.

10. Verfahren (70) zum Abladen einer Anzahl von Fassadenelementen von einem Objekt wie z. B. einem Fahrzeug, das unter einem Lift (10) nach einem der Ansprüche 5 bis 9 zum Heben von Fassadenelementen positioniert ist, wobei das Verfahren umfasst:
Bereitstellen (71) eines offenen Fördererführungsprofils (12) der beweglichen Hebebaugruppe (103) mit wenigstens einem Fassadenanbringungswagenelement (13a, 13b), wobei jedes Fassadenanbringungswagenelement (13a, 13b) ein erstes Teil aufweist, das innerhalb eines durch das entsprechende Fördererführungsprofil (12) gebildeten Hohlraums verschiebbar angeordnet ist und sich von dem Fördererführungsprofil (12) über den Schlitz (121) nach außen erstreckt,
Aktivieren (72) eines ersten verriegelten Zustands des Verriegelungselements (11) der beweglichen Hebebaugruppe (103),
Senken (73) der beweglichen Hebebaugruppe (103) des Lifts (10) hin zu den von dem Objekt abzuladenden Fassadenelementen,
Verbinden (74) des wenigstens einen Fassadenanbringungswagenelements (13a, 13b) mit wenigstens einem von dem Objekt abzuladenden Fassadenelement,
Heben (75) des wenigstens einen verbundenen Fassadenelements auf eine Ebene, auf der das wenigstens eine Führungsprofil (12) mit einem weiteren Führungsprofil (1021) auf einer starren Rahmenstruktur (102) des Lifts (10) ausgerichtet ist; und
Aktivieren (76) des zweiten nicht verriegelten Zustands des Verriegelungselements (11), wodurch möglich wird, dass sich jedes Fassadenanbringungswagenelement (13a, 13b), von denen wenigstens eines mit einem Fassadenelement verbunden ist, über die erste und die zweite Längsposition hinaus bewegt.

## Revendications

1. Dispositif de levage (10) destiné à soulever verticalement des éléments de façade, comprenant un élément de verrouillage (11) pour fixer un certain nombre d'éléments de façade raccordés via des organes de chariot de fixation (13a, 13b) à la façade à au moins un profilé de guidage (12) de convoyeur à l'extrémité ouverte du dispositif de levage (10),
où une fente (121) est aménagée le long de l'extension longitudinale de chaque profilé de guidage (12) de convoyeur sur une surface inférieure (122) de ceux-ci, où le profilé de guidage (12) de convoyeur est conçu pour loger au moins un organe de chariot de fixation (13a, 13b) à la façade,
où chaque organe de chariot de fixation (13a, 13b) à la façade a une partie adaptée pour être disposée par glissement à l'intérieur d'une cavité formée par le profilé de guidage (12) de convoyeur et s'étendant vers l'extérieur depuis le profilé de guidage (12) de convoyeur (12) via la fente (121),
l'élément de verrouillage (11) comprenant
un corps allongé (111) disposé adjacent à une surface externe d'une paroi latérale (123) d'au moins un parmi l'au moins un profilé de guidage (12) de convoyeur et s'étendant au moins en partie le long d'une extension longitudinale de celui-ci, où
le corps allongé (111) a une extrémité supérieure et une extrémité inférieure (112a), où
le corps allongé (111) est disposé de façon pivotante sur le dispositif de levage (10) dans son extrémité supérieure via au moins un raccordement (115, 101) pivotant pour atteindre un premier état verrouillé dans lequel le corps allongé (111) est fondamentalement parallèle à la paroi latérale (123) du profilé de guidage (12) de convoyeur associé et un second état déverrouillé où on fait pivoter le corps allongé (111) pour l'extraire du premier état verrouillé à un certain angle par rapport à la paroi latérale (123),
un premier élément bloquant (113) disposé à une première position longitudinale du corps (111), et
un second élément bloquant (114) disposé à une seconde position longitudinale du corps (111), où le premier et le second éléments bloquants (113, 114) s'étendent transversalement de l'extrémité inférieure (112a) du corps allongé (111) dans une direction d'éloignement du corps allongé (111) vers le profilé de guidage (12) de convoyeur, où le premier et le second éléments bloquants (113, 114) à l'état verrouillé s'étendent transversalement au-dessus et au-delà de la fente (121) dans la surface inférieure (122) du profilé de guidage de convoyeur, empêchant ainsi tout organe de chariot de fixation (13a, 13b) à la façade attaché au profilé de guidage de convoyeur de se déplacer longitudinalement au-delà de la première position longitudinale et de la seconde position longitudinale.

2. Dispositif de levage (10) selon la revendication 1 où, à l'état déverrouillé, le corps (111) est pivoté à un angle par rapport à la paroi latérale (123) du profilé de guidage (12) de convoyeur tel que le premier et le second éléments bloquants (113, 114) soient libérés de la fente (121) dans la surface inférieure (122) du profilé de guidage (12) de convoyeur, empêchant ainsi tout organe de chariot de fixation (13a, 13b) à la façade piégé entre la première et la seconde position longitudinale de se déplacer longitudinalement au-delà de celles-ci.

3. Dispositif de levage (10) selon la revendication 1 ou 2, où le corps (111) est disposé par glissement jusqu'au raccordement pivotant le long de l'axe longitudinal du profilé de guidage (12) de convoyeur entre deux points d'extrémité.

4. Dispositif de levage (10) selon l'une quelconque des revendications précédentes, où un piston réciproque (115) est disposé pour s'engager sur une surface (1111) du corps (111) pour déplacer le corps (111) dans l'état déverrouillé, et quand le piston réciproque est désengagé de ladite surface (1111), le corps (111) retourne à l'état verrouillé.

5. Dispositif de levage (10) selon la revendication 1, comprenant en outre
une structure de châssis (102) rigide,
un montage de levage (103) mobile sur lequel les au moins deux profilés de guidage (12) de convoyeur et l'élément de verrouillage (11) sont disposés, et une unité de levage (104) conçue pour déplacer le montage de levage (103) entre un niveau supérieur et un niveau inférieur.

6. Dispositif de levage (10) selon la revendication 5, où la structure de châssis (102) rigide comprend en outre un certain nombre d'autres profilés de guidage (1021) de convoyeur correspondant à celui du montage de levage (103) mobile, où les autres profilés de guidage (1021) de convoyeur sont alignés transversalement sur les profilés de guidage (12) de convoyeur du montage de levage mobile.

7. Dispositif de levage (10) selon les revendications 5 ou 6, où quand le montage de levage (103) mobile est au niveau supérieur, en cours d'utilisation ses profilés de guidage (12) de convoyeur sont situés à un niveau au-dessus des autres profilés de guidage (1021) de convoyeur (1021) de la structure de châssis (102) rigide.

8. Dispositif de levage (10) selon les revendications 5 à 7, où quand le montage de levage (103) mobile est au niveau inférieur, en cours d'utilisation ses profilés de guidage (12) de convoyeur sont situés à un niveau au-dessous des autres profilés de guidage (1021) de convoyeur de la structure de châssis (102) rigide.

9. Dispositif de levage (10) selon la revendication 5, où l'unité de levage (104) est à commande pneumatique.

10. Méthode (70) de déchargement d'un certain nombre d'éléments de façade d'un objet, comme un véhicule, positionnés sous un dispositif de levage (10) selon l'une quelconque des revendications 5 à 9 pour lever des éléments de façade, la méthode comprenant de :
fournir (71) un profilé de guidage (12) de convoyeur à l'extrémité ouverte du montage de levage (103) mobile avec au moins un élément de fixation de façade (13a, 13b), où chaque organe de chariot de fixation (13a, 13b) à la façade a une première partie adaptée pour être disposée par glissement à l'intérieur d'une cavité formée par le profilé de guidage (12) de convoyeur et s'étendant vers l'extérieur depuis le profilé de guidage (12) de convoyeur via la fente (121),
activer (72) un premier état verrouillé de l'élément de verrouillage (11) du montage de levage (103) mobile, abaisser (73) le montage de levage (103) mobile du dispositif de levage (10) vers les éléments de façade à décharger de l'objet,
raccorder (74) l'au moins un organe de chariot de fixation (13a, 13b) à la façade à l'au moins un élément de façade à décharger de l'objet,
lever (75) l'au moins un élément de façade raccordé à un niveau auquel l'au moins un profilé de guidage (12) de convoyeur est aligné avec un autre profilé de guidage (1021) fourni sur une structure de châssis (102) rigide du dispositif de levage (10) ; et
activer (76) le second état déverrouillé de l'élément de verrouillage (11), permettant ainsi à chaque organe de chariot de fixation (13a, 13b) à la façade, dont au moins un est raccordé à un élément de façade, de dépasser les première et seconde positions longitudinales.
